# EUROPEAN PATENT SPECIFICATION

(11) **EP 4 542 850 B1**
(45) Date of publication and mention of the grant of the patent: **11.11.2026**
(21) Application number: 24201958.6
(22) Date of filing: 23.09.2024
(51) Int. Cl.: H02P 27/08, H02M 7/48, H02M 1/12, H02M 1/44, H02M 7/5387, H02M 7/5395

(54) **MOTOR CONTROL SYSTEM FOR ENERGIZING A LOW-VOLTAGE MOTOR FROM A HIGH-VOLTAGE SOURCE**
MOTORSTEUERUNGSSYSTEM ZUR VERSORGUNG EINES NIEDERSPANNUNGSMOTORS AUS EINER HOCHSPANNUNGSQUELLE
SYSTÈME DE COMMANDE DE MOTEUR POUR ALIMENTER UN MOTEUR BASSE TENSION À PARTIR D'UNE SOURCE HAUTE TENSION

(30) Priority: 16.10.2023 US 202318487641
(43) Date of publication of application: 23.04.2025
(73) Proprietor: Honeywell International Inc., Charlotte, NC 28202 (US)
(72) Inventor: KOVARIK, Martin, Charlotte 28202 (US); KOSTKA, Roman, Charlotte 28202 (US); VAVRDA, Michal, Charlotte 28202 (US)
(74) Representative: Ingrassia, Fisher & Lorenz UK Ltd.

(56) References cited:
- US-B1- 6 351 090
- BONNETT A N: "Insulation systems available for PWM inverter fed motors for low voltage pulp and paper applications", PULP AND PAPER INDUSTRY TECHNICAL CONFERENCE, 1997., ANNUAL CINCINNATI, OH, USA 16-20 JUNE 1997, NEW YORK, NY, USA,IEEE, US, 16 June 1997 (1997-06-16), pages 17 - 28, XP032133504, ISBN: 978-0-7803-3919-4, DOI: 10.1109/PAPCON.1997.595207
- AUSTIN H BONNETT: "A Comparison Between Insulation Systems Available for PWM-Inverter-Fed Motors", IEEE TRANSACTIONS ON INDUSTRY APPLICATIONS, IEEE SERVICE CENTER, PISCATAWAY, NJ, US, vol. 33, no. 5, 1 October 1997 (1997-10-01), XP011022260, ISSN: 0093-9994

## Description

### TECHNICAL FIELD

The present disclosure generally relates to motor control systems and, more particularly, to a motor control system that allows energizing a low-voltage motor from a high-voltage source.

### BACKGROUND

Many vehicles, including many aircraft, are equipped with relatively high-voltage direct current (DC) power sources. For example, many aircraft include voltage sources that supply voltages in the range of 450-900VDC. The voltage sources are very safe and reliable. However, one potential challenge, especially in the aerospace industry, is that electric motors that are rated for these voltages can be relatively large and heavy, which can adversely impact flight costs.

In addition, these motors can also be costly to manufacture due, at least in part, to the requirements on isolation and dielectric strength of the materials used within the motor, not just due to the voltage rating of the motor, but also high-voltage corona discharge and partial discharge effects. In particular, at high altitudes, where the air pressure is lower, the dielectric breakdown voltage of the material is lower, and the partial discharge effect can cause thermal and chemical degradation of isolation materials resulting in unpredictable and deleterious effects. US 6 351 090 B1 discloses a device for starting a gas turbine in an aircraft which includes an electrical power supply delivering a direct current and a drive electric motor connected to the power supply, independent of the turbine to be started.

"A Comparison Between Insulation Systems Available for PWM-Inverter-Fed Motors",IEEE TRANSACTIONS ON INDUSTRY APPLICATIONS, IEEE SERVICE CENTER, PISCATAWAY, NJ, US,vol. 33, no. 5, 1 October 1997 establishes the need for two levels of motor insulation systems depending upon the available voltage waveform. An analysis of the various winding stresses is presented.

"Insulation systems available for PWM inverter fed motors for low voltage pulp and paper applications", PULP AND PAPER INDUSTRY TECHNICAL CONFERENCE, 1997., ANNUAL CINCINNATI, OH, USA 16-20 JUNE 1997 focuses specifically on integral horsepower AC induction motors used in the pulp and paper industry. An analysis of the various winding stresses is presented. The different requirements for the two insulation systems are discussed.

Hence, it is desirable to provide a way of using motors with lower voltage ratings, while still retaining the relatively high-voltage power sources. The present disclosure addresses at least this need.

### BRIEF SUMMARY

The scope of the invention is defined by the appended claims.

In one embodiment, a motor control system includes a voltage source, a multi-phase motor, and a motor control circuit. The voltage source is configured to supply a voltage at a maximum voltage magnitude. The multi-phase motor has a motor voltage rating that is less than the maximum voltage magnitude. The multi-phase motor includes a multi-phase stator and a rotor, and each phase of the multi-phase stator is configured to be energized to thereby generate a rotating magnetic field that causes the rotor to rotate. The motor control circuit is coupled to the voltage source and to each phase of the multi-phase stator. The motor control circuit is configured to energize each phase of the multi-phase stator with a voltage having a peak magnitude at or below the motor voltage rating voltage. The motor control circuit includes a multi-phase inverter, a multi-phase output filter circuit, and a duty-cycle control circuit. The multi-phase inverter is coupled to the voltage source and is coupled to receive a duty-cycle control signal. The multi-phase inverter is configured, in response to the duty-cycle control signal, to generate a plurality of pulse-width-modulated (PWM) voltages, where each PWM voltage has a magnitude based on the duty-cycle control signal. The multi-phase output filter circuit is coupled to receive the PWM voltages and is configured to supply the voltage to each phase of the multi-phase stator. The duty-cycle control circuit is configured to generate and supply the duty-cycle control signal. The duty-cycle control signal and the multiphase output filter ensure that the peak magnitude of the voltage supplied to each phase of the multi-phase stator is at or below the motor voltage rating.

In another embodiment, an actuation control system includes an actuator, a voltage source, a multi-phase motor, and a motor control circuit. The actuator is coupled to receive a drive torque and, upon receipt of the drive torque, to move to an actuator position. The voltage source is configured to supply a voltage at a maximum voltage magnitude. The multi-phase motor has a motor voltage rating that is less than the maximum voltage magnitude. The multi-phase motor includes a multi-phase stator and a rotor. The rotor is coupled to the actuator, and each phase of the multi-phase stator is configured to be energized to thereby generate a rotating magnetic field that causes the rotor to rotate and supply the drive torque to the actuator. The motor control circuit is coupled to the voltage source and to each phase of the multi-phase stator. The motor control circuit is configured to energize each phase of the multi-phase stator with a voltage having a peak magnitude at or below the motor voltage rating voltage. The motor control circuit includes a multi-phase inverter, a multi-phase output filter circuit, and a duty-cycle control circuit. The multi-phase inverter is coupled to the voltage source and is coupled to receive a duty-cycle control signal. The multi-phase inverter is configured, in response to the duty-cycle control signal, to generate a plurality of pulse-width-modulated (PWM) voltages, where each PWM voltage has a magnitude based on the duty-cycle control signal. The multi-phase output filter circuit is coupled to receive the PWM voltages and is configured to supply the voltage to each phase of the multi-phase stator. The duty-cycle control circuit is configured to generate and supply the duty-cycle control signal. The duty-cycle control signal and the multiphase output filter ensure that the peak magnitude of the voltage supplied to each phase of the multi-phase stator is at or below the motor voltage rating.

In yet another embodiment, an aircraft system includes an aircraft, a voltage source, a multi-phase motor, and a motor control circuit. The voltage source is disposed within the aircraft and is configured to supply a voltage at a maximum voltage magnitude. The multi-phase motor is disposed within the aircraft and has a motor voltage rating that is less than the maximum voltage magnitude. The multi-phase motor includes a multi-phase stator and a rotor, and each phase of the multi-phase stator is configured to be energized to thereby generate a rotating magnetic field that causes the rotor to rotate. The motor control circuit is disposed within the aircraft and is coupled to the voltage source and to each phase of the multi-phase stator. The motor control circuit is configured to energize each phase of the multi-phase stator with a voltage having a peak magnitude at or below the motor voltage rating voltage. The motor control circuit includes a multi-phase inverter, a multi-phase output filter circuit, and a duty-cycle control circuit. The multi-phase inverter is coupled to the voltage source and is coupled to receive a duty-cycle control signal. The multi-phase inverter is configured, in response to the duty-cycle control signal, to generate a plurality of pulse-width-modulated (PWM) voltages, where each PWM voltage has a magnitude based on the duty-cycle control signal. The multi-phase output filter circuit is coupled to receive the PWM voltages and is configured to supply the voltage to each phase of the multi-phase stator. The duty-cycle control circuit is configured to generate and supply the duty-cycle control signal. The duty-cycle control signal and the multiphase output filter ensure that the peak magnitude of the voltage supplied to each phase of the multi-phase stator is at or below the motor voltage rating.

Furthermore, other desirable features and characteristics of the motor control systems will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional block diagram of one embodiment of a motor control system;
FIG. 2 depicts a perspective view of one embodiment of an aircraft;
FIG.3 depicts a schematic diagram of one embodiment of a multi-phase inverter; and
FIG. 4 depicts a schematic diagram of one embodiment of a multi-phase LC filter circuit.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

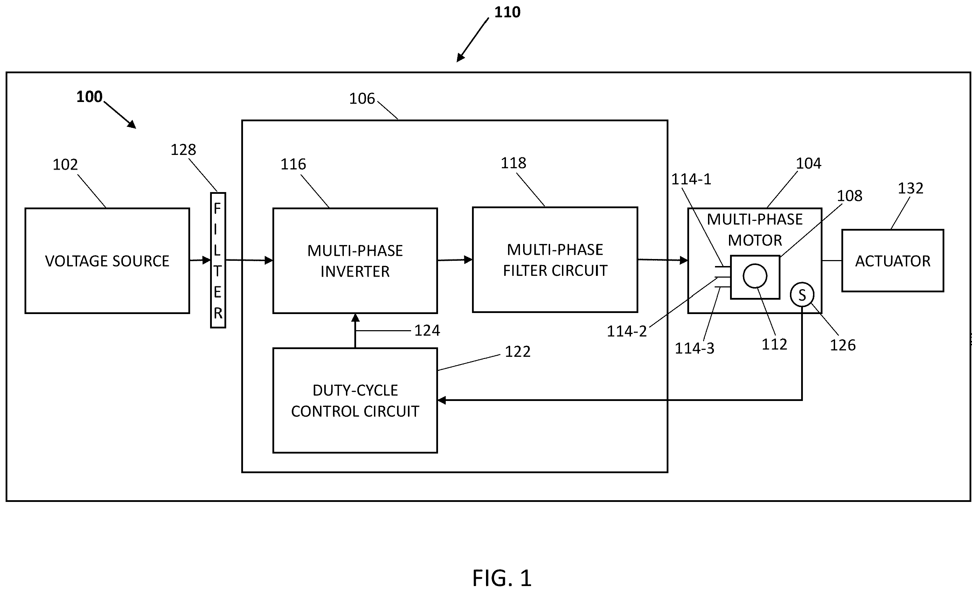

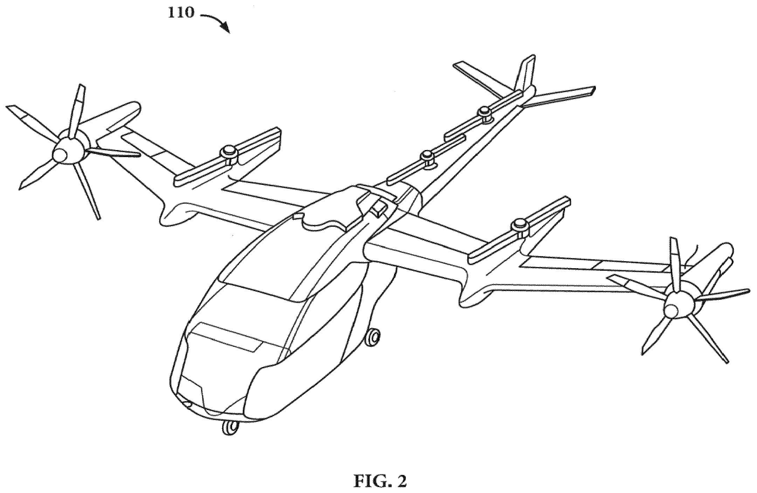

Referring first to FIG. 1, a functional block diagram of one embodiment of a motor control system 100 is depicted and includes a voltage source 102, a multi-phase motor 104, and a motor control circuit 106. Before proceeding further, it is noted that the depicted motor control system 100 is disposed within a vehicle 110. Although the configuration of the vehicle 110 may vary, in one particular embodiment the vehicle 110 is an aircraft, such as the example aircraft 110 depicted in FIG. 2. It should be further noted that although the aircraft 110 depicted in FIG. 2 is configured as an Urban Air Mobility (UAM) aircraft, it could be configured as any one of numerous other types of aircraft.

Returning now to a description of the motor control system 100, the voltage source 102 is configured to supply a voltage at a maximum voltage magnitude, and the multi-phase motor 104 has a motor voltage rating that is less than the maximum voltage magnitude. Although the relative values of the maximum voltage magnitude and the motor voltage rating may vary, the maximum voltage magnitude of the voltage source 102 is at least two times the motor voltage rating. The value of the maximum voltage magnitude is in a range of about 450 VDC to about 900 VDC, and the value of the motor voltage rating is less than about 300 VAC.

The multi-phase motor 104, as is generally known, includes a multi-phase stator 108 and a rotor 112. In the depicted embodiment, the multi-phase stator 108 is implemented as a three-phase stator, and thus includes three phases 114-1, 114-2, 114-3. It will be appreciated, however, that in other embodiments, the multi-phase stator 108 could be implemented with more than this number of phases.

Regardless of the specific number of phases 114, each phase of the multi-phase stator 108 is configured to be energized to thereby generate a rotating magnetic field. As is generally known, the rotating magnetic field in turn causes the rotor 112 to rotate and supply a drive torque.

The motor control circuit 106 is coupled to the voltage source 102 and to each phase 114 of the multi-phase stator 108. The motor control circuit 106 is configured to energize each phase 114 of the multi-phase stator 108 with a voltage, thereby generating the rotating magnetic field. The voltage supplied by the motor control circuit 106 has a peak magnitude that is at or below the motor voltage rating voltage. To implement this functionality, and as FIG. 1 further depicts, the motor control circuit 106 includes a multi-phase inverter 116, a multi-phase output filter 118, and a duty-cycle control circuit 122.

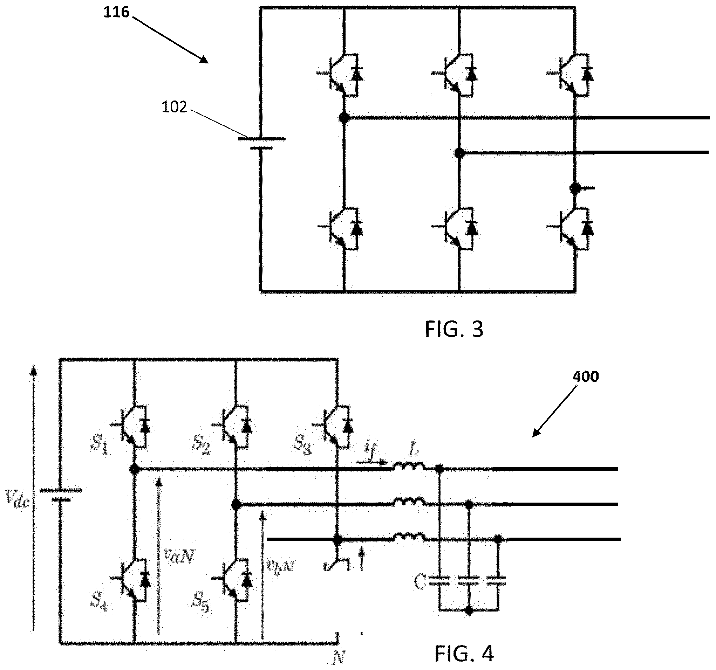

The multi-phase inverter 116 is coupled to the voltage source 102 and is additionally coupled to receive a duty-cycle control signal 124. The multi-phase inverter 116 is configured, in response to the duty-cycle control signal, and using known techniques, to generate a plurality of pulse-width-modulated (PWM) voltages. Specifically, the multi-phase inverter 116 is configured such that each PWM voltage has a magnitude that is based on the duty-cycle control signal 124. It will be appreciated that the multi-phase inverter 116 may be implemented using any one of numerous known inverter circuit topologies. In one embodiment, such as the one depicted in FIG. 3, the multi-phase inverter 116 is implemented using a 3-phase inverter.

The multi-phase output filter circuit 118 is coupled to receive the PWM voltages supplied by the multi-phase inverter 116 and is configured to supply the voltage to each phase 114 of the multi-phase stator 108. Although the multi-phase output filter circuit 118 may be variously implemented, in one particular embodiment, it is implemented as a multi-phase inductor-capacitor (LC) filter circuit. One example embodiment of a suitable multi-phase LC filter circuit 400 is depicted in FIG. 4.

The duty-cycle control circuit 122 is configured to generate and supply the duty-cycle control signal 124 to the multi-phase inverter 116. Depending on the embodiment, the duty-cycle control circuit 122 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the duty-cycle control circuit 122 includes processing logic that may be configured to carry out the functions, techniques, and processing tasks associated with the operation of the motor control system 100, as described herein. Furthermore, the steps of a method or algorithm described in connection with the embodiments disclosed herein may be embodied directly in hardware, in firmware, in a software module executed by the duty-cycle control circuit 122, or in any practical combination thereof. In accordance with one or more embodiments, the duty-cycle control circuit 122 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the duty-cycle control circuit 122, cause the duty-cycle control circuit 122 to execute and perform its functions.

In exemplary embodiments, computer-executable programming instructions are executed by the processor, control module, or other hardware associated with the duty-cycle control circuit 122 and cause the duty-cycle control circuit 122 to generate the duty-cycle control signal 124 such that the duty-cycle control signal 124, together with the multiphase output filter 118, ensures the peak magnitude of the voltage supplied to each phase 114 of the multi-phase stator 108 is at or below the motor voltage rating.

It will be appreciated that in some embodiments, the duty-cycle control signal 124 generated by the duty-cycle control circuit 122 may also adjust the PWM voltages supplied by the multi-phase inverter 116 to control the rotational speed of the multi-phase motor 104. Thus, as FIG. 1 additionally depicts, the motor control system 100 may, in such embodiments, additionally include a rotational speed and/or position sensor 126 that is configured to sense the rotational speed and/or position of the multi-phase motor 104 and supply a speed and/or position signal representative thereof to the duty-cycle control circuit 122. In such embodiments, the duty-cycle control signal 124, while adjusting the PWM voltages to control motor speed, additionally ensures, together with the with the multiphase output filter 118, that the peak magnitude of the voltage supplied to each phase 114 of the multi-phase stator 108 is at or below the motor voltage rating.

As FIG. 1 further depicts, the motor control system 100 may, at least in the depicted embodiment, additionally include an input filter 128. The input filter 128, when included, is coupled between the voltage source 102 and the motor control circuit 106. The input filter 128 is configured to at least reduce electromagnetic interference (EMI) that may be present in the voltage supplied from the voltage source 102.

The multi-phase motor 108 may be used to drive various loads. In the depicted embodiment, it is used to drive an actuator 132. The actuator 132, which may be coupled to any one of numerous devices, such as a valve, a flight control surface, or landing gear, just to name a few, is coupled to the rotor 112 of the multi-phase motor 108, to thereby receive the drive torque from the rotor 112 when the rotor 112 rotates. Although the actuator 132 is depicted separate from the multi-phase motor 104 in FIG. 1, it will be appreciated that this is done merely for clarity, and that in some embodiments, the multi-phase motor 104 may be implemented as one of the internal parts of the actuator 132. Moreover, while not depicted in FIG. 1, the actuator 132 may also include other components, such as gearing, an output shaft, a brake, and a position sensor, just to name a few.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A motor control system, comprising:
a voltage source (102) configured to supply a voltage at a maximum voltage magnitude, wherein the maximum voltage magnitude of the voltage source is in a range of about 450VDC to about 900VDC;
a multi-phase motor (108) having a motor voltage rating that is less than the maximum voltage magnitude, wherein the motor voltage rating of the multi-phase motor is less than about 300VAC, the multi-phase motor including a multi-phase stator (108) and a rotor (112), each phase of the multi-phase stator configured to be energized to thereby generate a rotating magnetic field that causes the rotor to rotate; and
a motor control circuit (106) coupled to the voltage source and to each phase of the multi-phase stator, the motor control circuit configured to energize each phase of the multi-phase stator with a voltage having a peak magnitude at or below the motor voltage rating voltage, the motor control circuit including:
a multi-phase inverter (116) coupled to the voltage source and coupled to receive a duty-cycle control signal, the multi-phase inverter configured, in response to the duty-cycle control signal, to generate a plurality of pulse-width-modulated, PWM, voltages, each PWM voltage having a magnitude based on the duty-cycle control signal,
a multi-phase output filter circuit (118) coupled to receive the PWM voltages and configured to supply the voltage to each phase of the multi-phase stator, and
a duty-cycle control circuit (122) configured to generate and supply the duty-cycle control signal,
wherein the duty-cycle control signal and multi-phase output filter ensure the peak magnitude of the voltage supplied to each phase of the multi-phase stator is at or below the motor voltage rating.

2. The motor control system of claim 1, wherein the multi-phase output filter circuit (118) comprises an inductor-capacitor (LC) filter.

3. The motor control system of claim 1, further comprising an input filter (128) coupled between the voltage source and the motor control circuit, the input filter configured to at least reduce electromagnetic interference.

## Patentansprüche

1. Motorsteuersystem, umfassend:
eine Spannungsquelle (102), die dazu konfiguriert ist, eine Spannung mit einer maximalen Spannungsmagnitude bereitzustellen, wobei die maximale Spannungsmagnitude der Spannungsquelle in einem Bereich von etwa 450 VDC bis etwa 900 VDC liegt;
einen mehrphasigen Motor (108), der eine Motornennspannung aufweist, die kleiner als die maximale Spannungsmagnitude ist, wobei die Motornennspannung des mehrphasigen Motors kleiner als etwa 300 VAC ist, wobei der mehrphasige Motor einen mehrphasigen Stator (108) und einen Rotor (112) beinhaltet, wobei jede Phase des mehrphasigen Stators dazu konfiguriert ist, angeregt zu werden, um dadurch ein rotierendes Magnetfeld zu erzeugen, dass den Rotor veranlasst, zu rotieren; und
eine Motorsteuerschaltung (106), die mit der Spannungsquelle und mit jeder Phase des mehrphasigen Stators gekoppelt ist, wobei die Motorsteuerschaltung dazu konfiguriert ist, jede Phase des mehrphasigen Stators mit einer Spannung anzuregen, die eine Spitzenmagnitude an oder unterhalb der Motorspannungsnennspannung aufweist, wobei die Motorsteuerschaltung Folgendes beinhaltet:
einen mehrphasigen Wechselrichter (116), der mit der Spannungsquelle gekoppelt ist und dazu gekoppelt ist, ein Arbeitszyklussteuersignal zu empfangen, wobei der mehrphasige Wechselrichter dazu konfiguriert ist, als Antwort auf das Arbeitszyklussteuersignal eine Vielzahl von pulsweitenmodulierten, PWM-, Spannungen zu erzeugen, wobei jede PWM-Spannung eine Magnitude auf Basis des Arbeitszyklussteuersignals aufweist,
eine mehrphasige Ausgabefilterschaltung (118), die dazu gekoppelt ist, die PWM-Spannungen zu empfangen, und dazu konfiguriert ist, die Spannung an jede Phase des mehrphasigen Stators bereitzustellen, und
eine Arbeitszyklussteuerschaltung (122), die dazu konfiguriert ist, das Arbeitszyklussteuersignal zu erzeugen und bereitzustellen,
wobei das Arbeitszyklussteuersignal und der mehrphasige Ausgabefilter sicherstellen, dass die Spitzenmagnitude der an jede Phase des mehrphasigen Stators bereitgestellten Spannung an oder unterhalb der Motornennspannung liegt.

2. Motorsteuersystem nach Anspruch 1, wobei die mehrphasige Ausgabefilterschaltung (118) einen Induktor-Kondensator (LC)-Filter umfasst.

3. Motorsteuersystem nach Anspruch 1, ferner umfassend einen Eingabefilter (128), der zwischen der Spannungsquelle und der Motorsteuerschaltung gekoppelt ist, wobei der Eingabefilter dazu konfiguriert ist, elektromagnetische Interferenz mindestens zu reduzieren.

## Revendications

1. Système de commande de moteur, comprenant :
une source de tension (102) configurée pour fournir une tension à une amplitude de tension maximale, dans lequel l'amplitude de tension maximale de la source de tension est dans une plage d'environ 450 VCC à environ 900 VCC ;
un moteur polyphasé (108) ayant une tension nominale de moteur qui est inférieure à l'amplitude de tension maximale, dans lequel la tension nominale de moteur du moteur polyphasé est inférieure à environ 300 VCA, le moteur polyphasé incluant un stator polyphasé (108) et un rotor (112), chaque phase du stator polyphasé étant configurée pour être excitée afin de générer un champ magnétique tournant qui amène le rotor à tourner ; et
un circuit de commande de moteur (106) couplé à la source de tension et à chaque phase du stator polyphasé, le circuit de commande de moteur étant configuré pour exciter chaque phase du stator polyphasé avec une tension ayant une amplitude crête inférieure ou égale à la tension nominale de tension de moteur, le circuit de commande de moteur incluant :
un inverseur polyphasé (116) couplé à la source de tension et couplé pour recevoir un signal de commande de rapport cyclique, l'inverseur polyphasé étant configuré, en réponse au signal de commande de rapport cyclique, pour générer une pluralité de tensions modulées en largeur d'impulsion, PWM, chaque tension PWM ayant une amplitude basée sur le signal de commande de rapport cyclique,
un circuit de filtre de sortie polyphasé (118) couplé pour recevoir les tensions PWM et configuré pour fournir la tension à chaque phase du stator polyphasé, et
un circuit de commande de rapport cyclique (122) configuré pour générer et fournir le signal de commande de rapport cyclique,
dans lequel le signal de commande de rapport cyclique et le filtre de sortie polyphasé garantissent que l'amplitude crête de la tension fournie à chaque phase du stator polyphasé est inférieure ou égale à la tension nominale de moteur.

2. Système de commande de moteur selon la revendication 1, dans lequel le circuit de filtre de sortie polyphasé (118) comprend un filtre à inductance-condensateur (LC).

3. Système de commande de moteur selon la revendication 1, comprenant en outre un filtre d'entrée (128) couplé entre la source de tension et le circuit de commande de moteur, le filtre d'entrée étant configuré pour au moins réduire l'interférence électromagnétique.
